# EUROPEAN PATENT SPECIFICATION

(11) **EP 2 594 917 B1**
(45) Date of publication and mention of the grant of the patent: **14.02.2018**
(21) Application number: 10854674.8
(22) Date of filing: 13.07.2010
(51) Int. Cl.: G01L 19/14, B60T 13/26, B60T 17/00

(54) **PRESSURE SENSOR UNIT AND BRAKE DEVICE**
DRUCKSENSOREINHEIT UND BREMSVORRICHTUNG
UNITÉ DE CAPTEUR DE PRESSION ET DISPOSITIF DE FREIN

(43) Date of publication of application: 22.05.2013
(73) Proprietor: Mitsubishi Electric Corporation, Tokyo 100-8310 (JP)
(72) Inventor: IMAIZUMI, Masaru, Tokyo 100-8310 (JP); FUKATA, Shogo, Tokyo 100-8310 (JP); ITANO, Yasuharu, Tokyo 100-8310 (JP)
(74) Representative: Sajda, Wolf E.
(86) International application number: PCT/JP2010/004520
(87) International publication number: WO 2012/007987

(56) References cited:
- EP-A2- 0 397 392
- GB-A- 2 144 506
- JP-A- 1 250 732
- JP-A- 10 292 375
- JP-A- 2006 527 839
- JP-A- 2007 261 533
- JP-A- 2009 109 396
- JP-U- H0 592 678

## Description

### Technical Field

The present invention relates to a pressure sensor unit used in a state in which a pressure sensor is affixed to a holder, and a brake device using such a pressure sensor unit.

### Background Art

Pressure sensors in general are used by being affixed to a holder and/or the like supporting the pressure sensor. The holder can be securely affixed with bolts and/or the like to equipment for measuring air pressure in a brake device and/or the like. However, because measurement errors can result when strain occurs in the pressure sensor, bolts cannot be used when affixing the pressure sensor to the holder. In addition, when the pressure sensor moves with respect to the holder during use, measurement errors result. Hence, a method of affixing a pressure sensor without causing strain and without allowing motion relative to the holder during use is necessary.

For example, in Patent Literature 1 a pressure-sensitive chip that is a pressure sensor is anodic bonded in a vacuum chamber onto a glass pedestal, and this pedestal is affixed by bonding with an adhesive to the bottom surface of a resin case.

In Patent Literature 2, a pressure sensor provided with a diaphragm that is a pressure sensor is affixed by laser welding to the top edge of a coupling material, this coupling material is inserted into a through-hole of an aluminum diecast base material created by casting stainless steel intermediate materials, and the coupling material and intermediate material are affixed by laser welding.

In Patent Literature 3, a pressure sensor chip that is a pressure sensor is affixed by adhesion using a soft silicone resin to a lid comprising one part of the case thereof.

### Prior Art Literature

### Patent Literature

Patent Literature 1: Unexamined Japanese Patent Application Kokai Publication JP-A-7-294 352 (page 3, FIG. 1).
Patent Literature 2: Unexamined Japanese Patent Application Kokai Publication JP-A-10-318 871 (page 3, FIG. 2)
Patent Literature 3: Unexamined Japanese Patent Application Kokai Publication JP-A-9-280 989 (page 3, FIG. 3).

### Disclosure of the Invention

### Problems to be Solved by the Invention

With the prior art as described above, time-consuming work including bonding and welding is necessary in assembly work to affix the pressure sensor to the holder.

In consideration of the foregoing, it is an object of the present invention to provide a pressure sensor unit in which a pressure sensor can be easily affixed to a holder.

### Means for Solving the Problems

In the pressure sensor unit of the present invention, a holder comprises a first holder member and a second holder member, and by fitting a fitting groove of the first holder member and a fitting claw of the second holder member with each other while housing a pressure sensor in housing holes provided respectively in the two holder members, the two holder members are affixed, and the pressure sensor is affixed to the holder.

### Effects of the Invention

The pressure sensor unit of the present invention can simplify assembly work for affixing a pressure sensor to a holder.

### Brief Description of the Drawings

- FIG. 1: is a vertical cross-section of a pressure sensor unit according to a first preferred embodiment of the present invention;
- FIG. 2: is an exploded oblique view of a holder according to a first preferred embodiment of the present invention;
- FIG. 3: is the exploded oblique view of FIG. 2 as viewed from a different angle;
- FIG. 4: is a component oblique view of a third holder member according to a first preferred embodiment of the present invention;
- FIG. 5: is a component oblique view of a second holder member according to a first preferred embodiment of the present invention;
- FIG. 6: is a component oblique view of a first holder member according to a first preferred embodiment of the present invention;
- FIG. 7: is an enlarged drawing showing the state in which a fitting claw 46 and a fitting groove 34 are fitted together when viewed from the direction of the arrow in FIG. 6;
- FIG. 8: is a component oblique view of a third holder member according to a second preferred embodiment of the present invention;
- FIG. 9: is a component oblique view of a second holder member according to a second preferred embodiment of the present invention;
- FIG. 10: is a component oblique view of a first holder member according to a second preferred embodiment of the present invention;
- FIG. 11: is an enlarged drawing showing the state in which a fitting claw 246 and a fitting groove 234 are fitted together when viewed from the direction of the arrow in FIG. 10;
- FIG. 12: is an enlarged drawing showing the state in which a fitting claw 256 and a fitting groove 244 are fitted together when viewed from the direction of the arrow in FIG. 9; and
- FIG. 13: is a vertical cross-section of a pressure sensor unit according to a third preferred embodiment of the present invention.

### Mode for Carrying Out the Invention

### First Preferred Embodiment

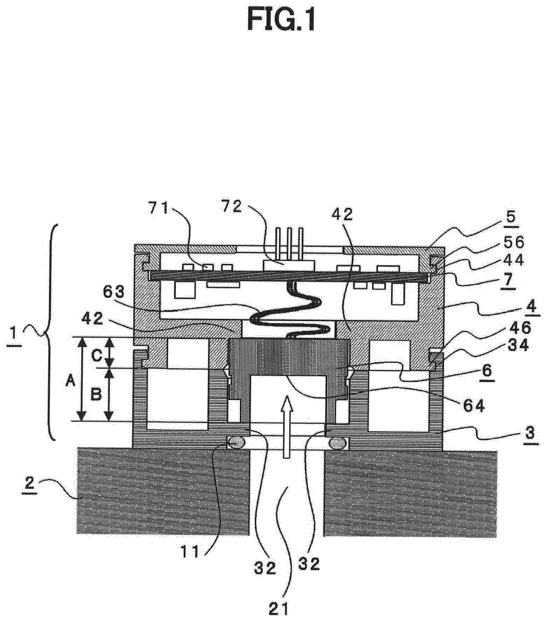

Below, the preferred embodiments of the present invention are described. FIG. 1 is a vertical cross-section of a pressure sensor unit according to a first preferred embodiment of the present invention.

A cylindrical pressure sensor unit 1 is attached to machinery 2 driven by air, and measures an air pressure in an air circuit 21 that is a circuit through which the air in the machinery 2 passes. As shown in FIG. 1, the pressure sensor unit 1 has a composition in which a pressure sensor 6 and an electronic substrate 7 are supported by a holder composed of a first holder member 3, a second holder member 4 and a third holder member 5.

The pressure sensor unit 1 is affixed to the machinery 2 by a non-represented bolt so that the side on which the pressure sensor 6 is provided faces an air circuit 21. Through this, the air pressure from the air circuit 21 is conveyed as far as the pressure sensor 6 of the pressure sensor unit 1. The arrow in FIG. 1 indicates the air pressure application direction. In addition, a flexible O-ring 1 is provided between the pressure sensor unit 1 and the machinery 2 for sealing.

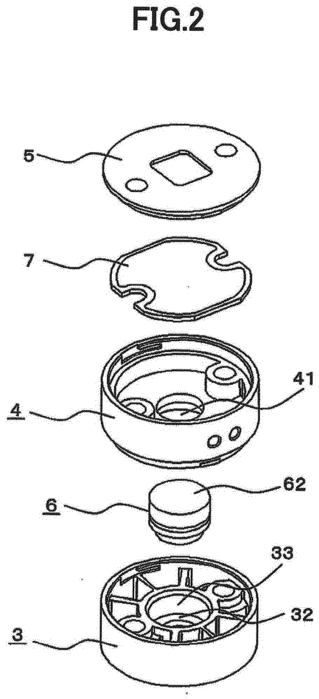

FIG. 2 is an exploded oblique view of the holder according to the first preferred embodiment of the present invention. As shown in FIG. 2, the cylindrical holder comprises three holder members, namely the first holder member 3, the second holder member 4 and the third holder member 5.

A circular first housing hole 33 is provided in the first holder member 3 in order to house a portion of the pressure sensor 6.

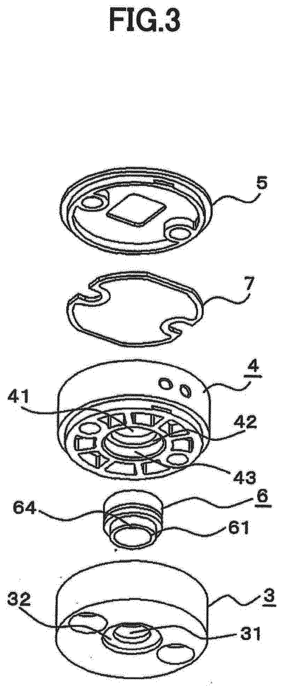

FIG. 3 is an exploded oblique view of FIG. 2 as seen from a different angle. As shown in FIGS. 2 and 3, an opening 31 for connecting the air circuit 21 of the machinery 2 and the first housing hole 33 is provided in the center of the bottom surface of the first housing hole 33, and a flange 32 is formed around the circumference thereof.

As shown in FIG. 3, a circular second housing hole 43 is provided at a position on the second holder member 4 facing the first housing hole 33. The second housing hole 43 is a hole drilled facing the opposite direction from the first housing hole 33, and houses the part of the pressure sensor 6 that cannot be housed in the first housing hole 33. An opening 41 is formed in the center of the bottom of the second housing hole 43, and a flange 42 is formed around the circumference thereof. The opening 41 is provided to allow a cable 63 to pass through, as shown in FIG. 1.

Next, the procedure for housing the pressure sensor 6 in the holder will be described with reference to FIGS. 2 and 3. At first, the bottom surface 61 of the pressure sensor 6 shown in FIG. 3 is placed on the flange 32 of the first holder member 3 shown in FIG. 2. Next, the top surface 62 on the opposite side from the bottom surface 61 of the pressure sensor 6 is immobilized by the flange 42 of the second holder member 4, as shown in FIG. 2. Through this, the pressure sensor 6 is housed in the holder.

In addition, as shown in FIG. 1 the electronic substrate 7 for electrically processing signals from the pressure sensor 6 is provided on the opposite side of the second holder member 4 from the side on which the pressure sensor 6 is provided. A cable 63 for conveying pressure signals detected by the pressure sensor 6 to the electronic substrate 7 emerges from the top surface 62 of the pressure sensor 6. This cable 63 is connected to the electronic substrate 7 by passing through the opening 41 formed in the second holder member 4, as shown in FIGS. 2 and 3. In addition, the third holder member 5 has a structure covering the electronic substrate 7, as a lid for protecting the electronic substrate 7.

In this manner, the holder is divided into the first holder member 3, the second holder member 4 and the third holder member 5, and the pressure sensor 6 and the electronic substrate 7 are interposed between these holder members respectively to give a layered structure. Through this, it is possible to make the pressure sensor unit 1 more compact and reduce space needed for mounting.

As shown in FIG. 1, a diaphragm 64 is provided in the cup-shaped pressure sensor 6 so as to be orthogonal to the air pressure application direction. The pressure sensor 6 is used with the diaphragm 64 facing the machinery 2 side. When air reaches this diaphragm 64, the diaphragm 64 elastically deforms under the pressure thereof. The amount of this strain is detected by a strain gauge built into the pressure sensor 6, so that the air pressure of the air circuit 21 can be measured. Consequently, when massive strain occurs on the pressure sensor 6 when the pressure sensor 6 is affixed to the holder, that becomes a detection error and hinders accurate pressure measurement.

A method of affixing the components so that there are small gaps between the pressure sensor 6 and the flange 32, and between the pressure sensor and the flange 42, can be conceived in order to prevent strain from occurring. However, with this method the pressure sensor 6 moves relative to the holder when air pressure is applied, and air may leak from the gaps, which naturally hinder accurate pressure measurement. Hence, a method of affixing the pressure sensor 6 to the holder with as small a gap as possible is needed so that strain on the pressure sensor 6 does not occur.

The holder of the first preferred embodiment has a structure as described below in order to affix the pressure sensor 6 to the holder with as a small a gap as possible so that strain on the pressure sensor 6 is unlikely to occur.

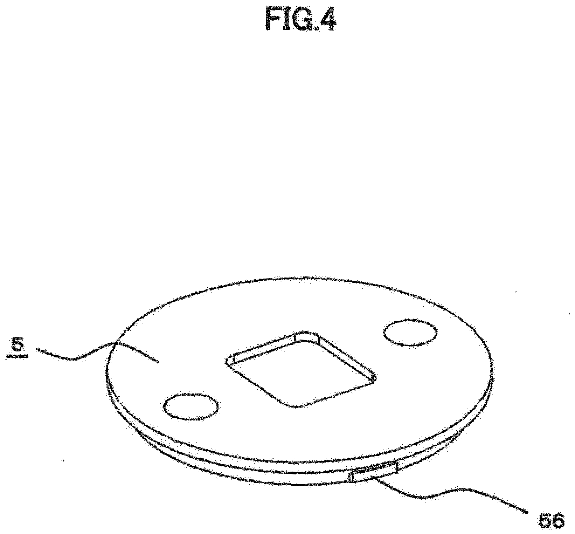

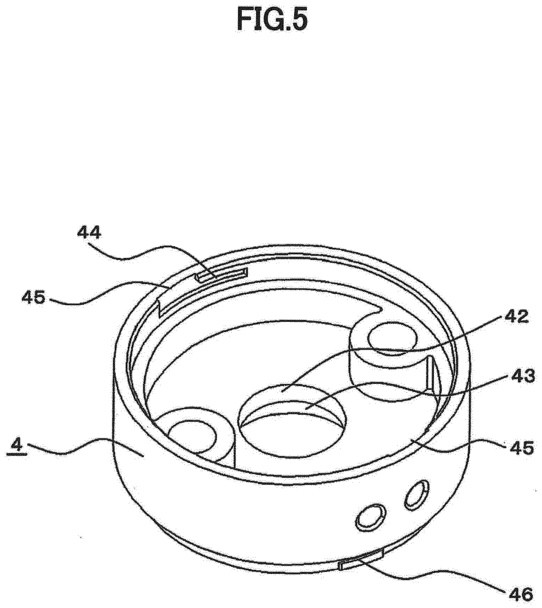

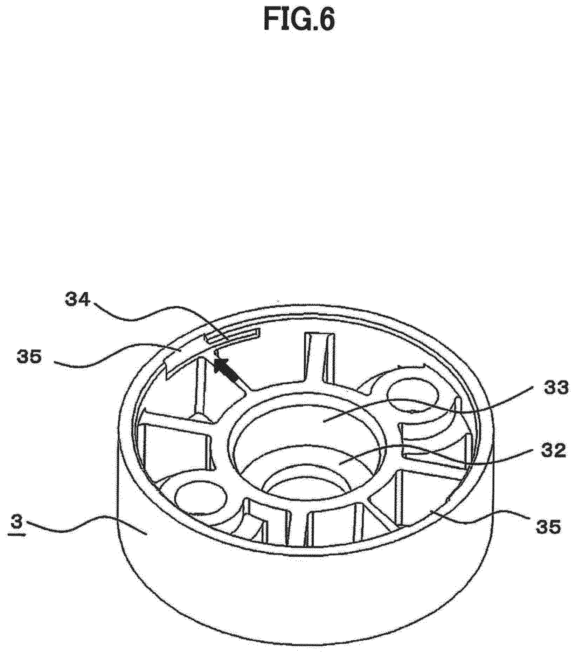

FIG. 4 is a component oblique view of the third holder member 5 according to the first preferred embodiment of the present invention. FIG. 5 is a component oblique view of the second holder member 4 according to the first preferred embodiment of the present invention. FIG. 6 is a component oblique view of the first holder member 3 according to the first preferred embodiment of the present invention.

As shown in FIG. 6, a fitting groove 34 is provided on the top side in the drawing (the second holder member 4 side) of the inside wall of the first holder member 3, orthogonal to the air pressure application direction, along the circumferential direction of the cylindrical holder. On the other hand, as shown in FIG. 5 the part on the bottom side in the drawing (the first holder member 3 side) of the second holder member 4 has a radius smaller than the part on the top side in the drawing.

The outer diameter of this part is somewhat smaller than the inner diameter of the first holder member 3 and can be inserted into the first holder member 3. A fitting claw 46 that fits into the fitting groove 34 is provided on the outer wall of this part. The pair consisting of the fitting groove 34 and the fitting claw 46 is provided so that each respectively has the same shape at a position rotated 180° about the center axis of the holder. Through this, the first holder member 3 and the second holder member 4 are affixed at two locations.

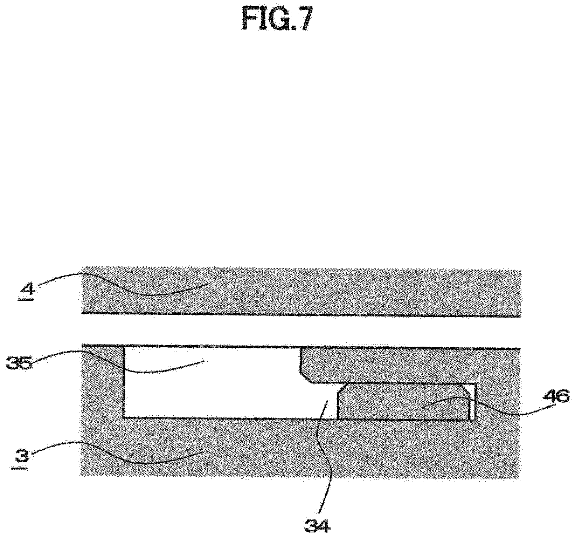

FIG. 7 is an enlarged drawing showing the state in which a fitting claw 46 and a fitting groove 34 are fitted together when viewed from the direction of the arrow in FIG. 6. As shown in FIG. 7, the fitting groove 34 has an introduction opening 35 at one end thereof. The width of the introduction opening 35 is wider than the width of the fitting claw 46, so that the fitting claw 46 can be inserted and removed in the up-and-down direction in the drawing.

The area to the right side in the drawing from the introduction opening 35 of the fitting groove 34, that is to say the area on the side opposite the side in which the introduction opening 35 of the fitting groove 34 is formed, is a groove having the same height as the height as the fitting claw 46 in the up-and-down direction in the drawing so that movement of the fitting claw 46 in the up-and-down direction in the drawing can be controlled.

When the fitting claw 46 is fitted into the fitting groove 34, at first the fitting claw 46 is inserted into the introduction opening 35 from the top side of the drawing and the fitting claw 46 makes contact with the bottom surface of the fitting groove 34. At this time, the pressure sensor 6 is in a state housed in the first housing hole 33 and the second housing hole 43.

Next, the fitting claw 46 is fitted into the fitting groove 34 as shown in FIG. 7 by the fitting claw 46 being slid to the right in the drawing. In this state, the fitting claw 46 cannot move in the up-and-down direction in the drawing, that is to say in a direction parallel to the air pressure application direction, so that the first holder member 3 and the second holder member 4 are affixed in place.

A dimension A shown in FIG. 1 is the total length of the pressure sensor 6 in a direction parallel to the air pressure application direction. A dimension B is the depth from the fitting surface to the flange 32 on the other side of the housing hole 33 of the first holder member 3. A dimension C is the depth from the fitting surface to the flange 42 on the other side of the housing hole 43 of the second holder member.

Here, in the state in which the fitting claw 46 is fitted into the fitting groove 34, the sum of the dimension B and the dimension C is the distance from the bottom surface of the first housing hole 33 to the bottom surface of the second housing hole 43. The dimension B and the dimension C are respectively measured at the time the first holder member 3 and the second holder member 4 are formed and are precisely managed so that the sum of the dimension B and the dimension C is equal to the dimension A.

Through this, it is difficult to apply excessive strain to the pressure sensor 6. In addition, it is possible for the pressure sensor 6 to be affixed without gaps in the air pressure application direction, making a movement with respect to the holder difficult. When the pressure sensor 6 is removed, removal is possible by the reverse procedures to the above-described procedures.

In addition, the electronic substrate 7 interposed between the second holder member 4 and the third holder member 5 is affixed by a similar structure to that described above. This point is explained below. As shown in FIG. 5, fitting grooves 44 are provided in two locations in the inner wall of the second holder member 4 along the circumferential direction of the cylindrically shaped holder, and moreover an introduction opening 45 is provided at one end of the respective fitting grooves 44. In addition, as shown in FIG.4, fitting claws 56 for fitting with these fitting grooves 44 are provided in two locations on the outer wall of the third holder member 5.

The electronic substrate 7 is interposed between the second holder member 4 and the third holder member 4, and the second holder member 4 and the third holder member 5 are affixed and the electronic substrate 7 is affixed in the holder by the fitting claws 56 being inserted from the introduction openings 45 and slid so that the fitting claws 56 is fitted into the fitting grooves 44.

Because the electronic substrate 7 is affixed in the holder in this manner, excessive strain is unlikely to occur to the electronic substrate 7. As shown in FIG. 1, multiple electronic components 71 and connectors 72 are mounted by soldering to the surface of the electronic substrate 7, but when the electronic substrate 7 that is the base warps, cracks can occur in the soldered parts, which can cause poor electric currents. On this point, in the pressure sensor unit 1 of this preferred embodiment, by affixing the electronic substrate 7 as described above, it is possible to prevent poor electric currents.

With this first preferred embodiment, the fitting grooves or fitting claws were affixed in two locations in the respective holder member, but this may be any number. In general, the larger this number, the larger the contact surface area of the fitting part becomes, so the more the fitting force increases. The fitting groove was provided in the first holder member and the fitting claw was provided in the second holder member, but the fitting groove and fitting claw may be provided on respectively opposite holder members. The same is also the case with regard to the fitting grooves and fitting claws of the second holder member and the third holder member.

The first holder member 3, the second holder member 4 and the third holder member 5 are respectively made by injection molding of a material composed of polyphenylene sulfide resin, which is a thermoplastic resin, reinforced with glass fibers.

At this time, the measurements of each part of each holder member are determined through the measurements of the molds used in molding the various holder members. For the dimension B that is the depth of the second housing hole and the dimension C that is the depth of the first housing hole, which are critical in the above-described fitting mechanism, if the dimension A that is the total length of the pressure sensor 6 is confirmed in advance and a mold created by measurement management of the measurements of other parts of the corresponding molds, each holder member can be mass produced efficiently and with high precision.

In this first preferred embodiment, polyphenylene sulfide resin reinforced with glass fibers was utilized as the material of each holder member. Sufficient strength can be ensured for this material because the Young's modulus is 5 GPa or greater and high rigidity is obtained. In addition, it is possible to obtain high measurement precision through this material.

However, the material of each holder member is not limited to this, for it would also be fine to use thermoplastic resins such as polyamide 6, polyamide 66, polybutylene terephthalate, polyacetal, polysulfone, polyethersulfone, polyether ether ketone, polycarbonate and/or poly(methyl methacrylate), and/or thermosetting resins such as epoxy resin, melamine resin, phenol resin and/or unsaturated polyester resin.

In addition, reinforcement with inorganic fillers such as glass fibers or talc is not necessary. Furthermore, even with reinforced materials, any type of reinforcing material and distribution ratio thereof is fine. In other words, any type is fine so long as this is a material that is fluid when molding and can be caused to harden after being poured into a mold.

In addition, with this first preferred embodiment, an example was presented of a holder production method though injection molding. However, the method of producing each holder member is not limited to this, and also other molding methods that use molds may be used, such as resin casting, compression molding, RIM molding and/or the like.

According to the above explanations, the pressure sensor unit 1 of the first preferred embodiment is such that the pressure sensor 6 can be affixed with respect to the holder without needing time-consuming work such as welding or bonding, and thus assembly work can be simplified.

In addition, when the pressure sensor 6 fails, the pressure sensor 6 can be easily removed and replaced without destroying the holder.

In addition, the pressure sensor 6 is housed in the first housing hole 33 and the second housing hole 43 so that a direction parallel to the air pressure application direction of the pressure sensor 6 matches with the direction of depth of the first housing hole 33 and the second housing hole 43.
In a state in which and the fitting claw 46 is fitted into the fitting groove 34, the distance from the bottom surface of the first housing hole 33 to the bottom surface of the second housing hole 43 (the sum of the dimension B and the dimension C) is equivalent to the dimension (dimension A) of the total length of the pressure sensor 6 in a direction parallel to the air pressure application direction, so strain is unlikely to occur in the pressure sensor and the pressure sensor 6 is unlikely to move with respect to the holder during use.

In addition, because bonding agents and laser welding are not used when affixing the pressure sensor 6 in the holder, strain is unlikely to occur in the pressure sensor 6 caused by contraction of the bonding agent or contraction accompanying welding, so measurement errors caused by this are unlikely to occur.

In addition, no excessive strain is given to the electronic circuit board 7, so damage such as cracks occurring in the solder on the electronic circuit board 7 is unlikely to occur.

In addition, even if the electronic circuit board 7 fails, the electronic circuit board can easily be removed and replaced, the same as with the pressure sensor 6.

In addition, depending on the type of pressure sensor there are cases in which the diaphragm is integrated with the cup-shaped body through a method such as laser welding, so that the dimension of the total length of the pressure sensor is varied. Even such cases can be dealt with easily if the dimension of the part corresponding to the mold is finely adjusted, even if the mold for molding resin into the various holder members is not newly manufactured.

Furthermore, in the pressure sensor unit 1 of this first preferred embodiment, the pressure sensor 6 and the electronic substrate 7 are divided into separate parts and are provided on both surfaces of a highly rigid holder. In some conventional pressure sensor units, the pressure sensor was directly mounted on the electronic substrate.

With this type of pressure sensor unit, due to air pressure being applied directly to the electronic substrate, creating the problems that strain of the electronic substrate 7 occurred, cracks appeared in the solder and the electronic substrate 7 deformed and media pressure escaped. In contrast, with the pressure sensor unit 1 of this first preferred embodiment, the air pressure is not applied directly to the electronic substrate 7, so reliability is enhanced.

### Second Preferred Embodiment

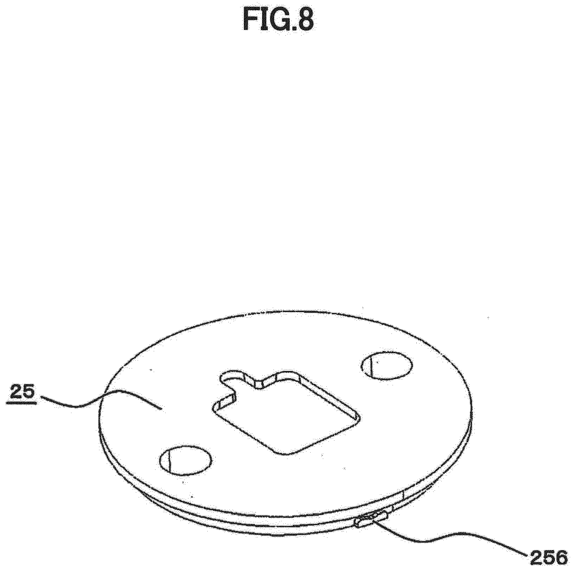

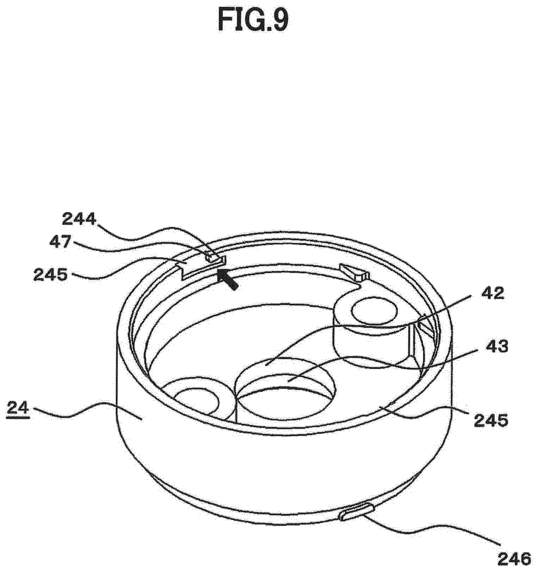

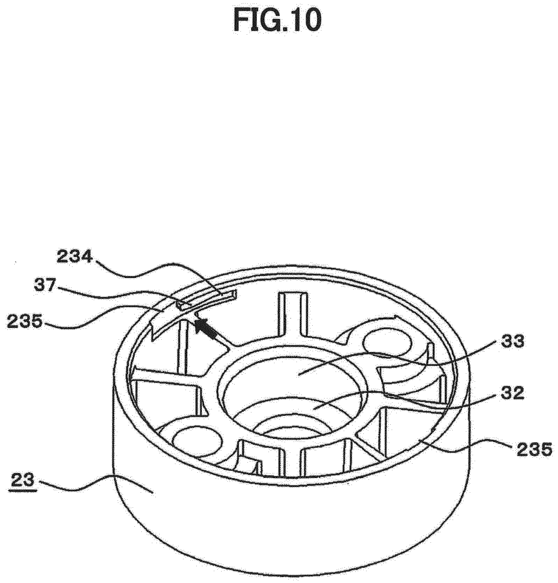

FIG. 8 is a component oblique view of the third holder member 25 according to a second preferred embodiment of the present invention. FIG. 9 is a component oblique view of the second holder member 24 according to the second preferred embodiment of the present invention. FIG. 10 is a component oblique view of the first holder member 23 according to the second preferred embodiment of the present invention.

The composition of the pressure sensor unit in this second preferred embodiment is basically the same as the composition of the pressure sensor unit 1 in the first preferred embodiment. The difference from the first preferred embodiment is the shape of the fitting groove and the fitting claw provided in each holder member.

As shown in FIG. 10, a fitting groove 234 provided in the first holder member 23 has a protrusion 37. As shown in FIG. 9, a fitting claw 246 is provided in the second holder member 24. This fitting groove 234 and fitting claw 246 are provided with the same shapes in the same positions rotated 180° above the central axis of the holder. Through this, the first holder member 23 and the second holder member 24 can be affixed in two locations.

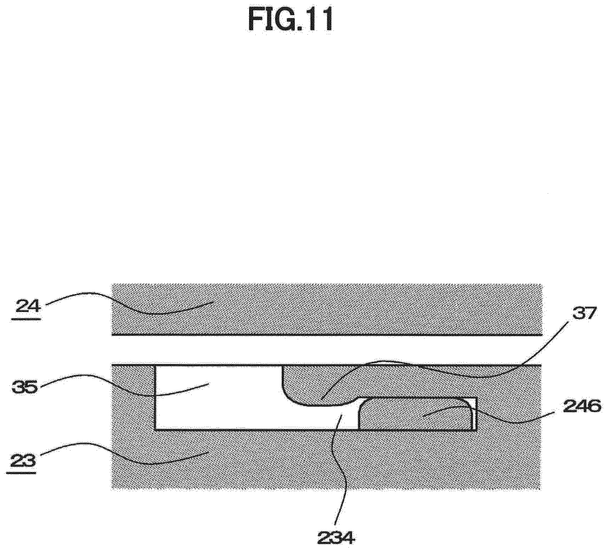

The fitting claw 246 is fitted by sliding into the fitting groove 234 so that the first holder member 23 and the second holder member 24 are affixed which is the same as in the first preferred embodiment. FIG. 11 is an enlarged drawing showing the state in which the fitting claw 246 and the fitting groove 234 are fitted together when viewed from the direction of the arrow in FIG. 10. As shown in FIG. 11, the fitting groove 234 has an introduction opening 35.

The width of the introduction opening 35 is wider than the width of the fitting claw 246, so that the fitting claw 246 can be inserted or removed in the up-and-down direction in the drawing. The part of the fitting groove 234 on the right side of the introduction opening 35 in the drawing is a groove having substantially the same height as the height of the fitting claw 246 in the up-and-down direction in the drawing so as to be able to limit movement of the fitting claw 246 in the up-and-down direction.

When the fitting claw 246 is fitted into the fitting groove 234, at first the fitting claw 246 is inserted into the introduction opening 35 from the top side in the drawing and the fitting claw 246 makes contact with the bottom surface of the fitting groove 234. Next, the fitting claw 246 is slid to the right in the drawing, so that the fitting claw 246 goes past the protrusion 37 and ultimately is affixed in the state shown in FIG. 11 at a position past the protrusion 37.

In this state, movement of the fitting claw 246 is limited in a direction parallel to the air pressure application direction (the up-and-down direction in the drawing) and the holder circumferential direction (the left-and-right direction in the drawing). When the fitting claw 246 goes past the protrusion 37, the fitting claw 246 and the protrusion 37 elastically deform, but due to the plasticity of the resin, each returns to its original shape after passing.

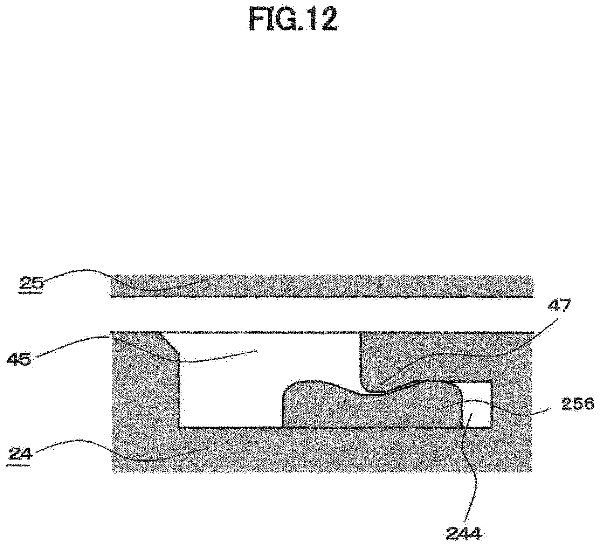

Similarly, a protrusion 47 is provided in the fitting groove 244 of the second holder member 24 shown in FIG. 9. In contrast, the fitting claw 256 provided in the third holder member 25 shown in FIG. 8 has the top surface in the drawing cut slightly and is in a shape similar to mountains on two sides of a valley. FIG. 12 is an enlarged drawing showing the state in which the fitting claw 256 and the fitting groove 244 are fitted together when viewed from the direction of the arrow in FIG. 9. Even the fitting between the fitting groove 244 and the fitting claw 256 is the same as the fitting between the fitting groove 234 and the fitting claw 246.

As shown in FIG. 12, when the fitting groove 244 and the fitting claw 256 are fitted together, the valley provided in the top surface in the drawing of the fitting claw 256 is affixed in a state interlocking with the protrusion 47. In this state, movement of the fitting claw 256 is limited in a direction parallel to the air pressure application direction (the up-and-down direction in the drawing) and the holder circumferential direction (the left-and-right direction in the drawing.

Because the pressure sensor unit is attached to machinery 2 driven by air, the vibrations of the machinery 2 could extend to the pressure sensor unit. With the fitting structure shown in the first preferred embodiment, there are concerns that the fitting claw 46 or the fitting claw 56 could separate from the fitting groove 34 or 44, respectively, due to these vibrations and that the pressure sensor 6 and electronic substrate 7 could separate from the pressure sensor unit 1.

In addition, when assembling the pressure sensor unit 1, even when the assembled pressure sensor unit 1 is affixed by a bolt and/or the like to the machinery 2, operability is poor because the fitting claw 46 or the fitting claw 56 could separate from the fitting groove 34 or 44, respectively.

By using the fitting structure of this second preferred embodiment, when vibrations or outside forces act, the fitting claws are unlikely to separate from the fitting grooves. In addition, with this second preferred embodiment, when the pressure sensor 6 or the electronic substrate 7 fails, such can easily be removed by sliding the fitting claw in the opposite direction from the direction slid when fitting, so that ease of removal is sufficiently achieved.

Similar to the first preferred embodiment, the fitting grooves or fitting claws are affixed in two locations in the holder members, respectively, but any number would be fine. In general, the larger the number, the larger the contact surface area with the fitting parts, so the fitting force increases.

In addition, the fitting groove was provided in the first holder member and the fitting claw was provided in the second holder member, but the fitting groove and the fitting claw may be provided in respectively opposite holder members. The same is also true of the fitting grooves and fitting claws of the second holder member and the third holder member.

Above, in the pressure sensor unit in this second preferred embodiment the protrusion provided in the fitting groove restricts a movement of the fitting claw in the slide direction so that even if vibration of the machinery is conveyed to the pressure sensor unit, the fitting claw does not easily separate from the fitting groove.

In addition, even when the pressure sensor unit is attached to machinery, the holder does not easily separate, so it is possible to improve operability.

In addition, the fitting claw is affixed at a position completely past the protrusion of the fitting groove and is not normally affixed at a position where the protrusions of the fitting claw and the fitting groove make contact. Through this, stress does not act on the part of the protrusions of the fitting claw and the fitting groove, so it is possible to avoid damage caused under specific environments, such as creep failures and crazing failures, thereby raising reliability.

The fitting structure between the first holder member and the second holder member may also be applied to the fitting structure between the second holder member and the third holder member. In addition, conversely the fitting structure between the second holder member and the third holder member may also be applied to the fitting structure between the first holder member and the second holder member.

### Third Preferred Embodiment

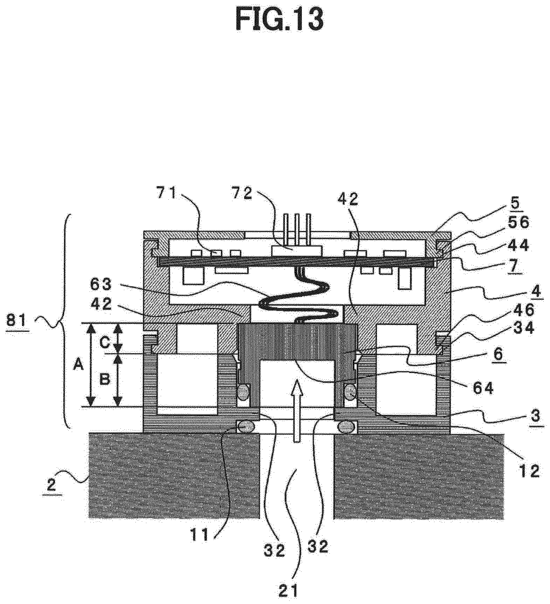

FIG. 13 is a cross-section of a pressure sensor unit 81 according to a third preferred embodiment of the present invention. The specific composition of the pressure sensor unit 81 is the same as that of the pressure sensor unit 1 of the first preferred embodiment. The difference from the first preferred embodiment is that an elastic O-ring 12 is interposed between the inner wall of the housing hole 33 of the first holder member 3 and the pressure sensor 6.

In the first preferred embodiment, it was explained that if the total design length of the pressure sensor is confirmed in advance and molding is accomplished by managing the measurements of that mold part, it is possible to mass produce, efficiently and with good precision, the first holder member 3, the second holder member 4 and the third holder member 5.

However, when for example manufacturing with a machining process such as injection molding, variances in individual dimensions, albeit small, arise, so the depth B of the housing hole 33 of the first holder member 3 and the depth C of the housing hole 43 of the second holder member 4 fluctuate. When more precise pressure measurements are needed as a sensor, these measurement variations can be problematic.
If the sum of the dimension B and the dimension C is greater than the dimension A, the pressure sensor 6 in the holder can move relative to the holder, and depending on the case air could leak out from the gap resulting between the first holder member 3 and the pressure sensor 6.

Hence, in the pressure sensor unit 81 of this third preferred embodiment, a ring-shaped elastic body 12 is placed between the inner wall of the housing hole 33 of the first holder member 3 and the outer wall of the pressure sensor 6, and the pressure sensor 6 is affixed with this in an elastically deformed shape. An O-ring 12 was used as this elastic ring, but the type and material of this do not matter as long as this is an elastic body.

Through this, even if the sum of the dimension B and the dimension C is somewhat greater than the dimension A due to measurement variances, air leaking from the gap between the first holder member 3 and the pressure sensor 6 is sealed by the O-ring 12.

According to the above description, in the pressure sensor unit of this third preferred embodiment 3, it is possible to make sealing certain and to improve reliability with respect to air leaks.

The first holder member 3, the second holder member 4 and the third holder member 5 in this third preferred embodiment can be respectively replaced by the first holder member 23, the second holder member 24 and the third holder member 25 explained in the second preferred embodiment.

### Fourth Preferred Embodiment

The pressure sensor unit of the present invention as explained in the first through third preferred embodiments can be applied to a brake device of an electric train. The brake device of an electric train is provided with an air compressor and a tank that stores air compressed by the air compressor. The pressure sensor unit of the present invention as explained in the first through third preferred embodiments can be used to detect air pressure in the tank, and/or the like.

The pressure sensor unit of the present invention as explained in the first through third preferred embodiments is such that the pressure sensor 6 is not likely to move with respect to the holder, so measurement errors caused by applied air pressure and vibration during operation of the electric train are unlikely to occur. Accordingly, the pressure sensor unit of the present invention as explained in the first through third preferred embodiments is suitable for application to the brake device of an electric train.

Besides the brake device of an electric train, the pressure sensor unit of the present invention as explained in the first through third preferred embodiments can also be applied to other equipment requiring measurement of air pressure, for example automatic doors, toilets, pantographs, wipers, steam whistles and/or the like of an electric train.

### Description of Reference Numerals

- 1: Pressure sensor unit
- 2: Machinery driven by air
- 3: First holder member
- 4: Second holder member
- 5: Third holder member
- 6: Pressure sensor
- 7: Electronic substrate
- 12: O-ring
- 21: Air circuit
- 23: First holder member
- 24: Second holder member
- 25: Third holder member
- 31: Opening
- 32: Flange
- 33: First housing hole
- 34: Fitting groove
- 35: Introduction opening
- 37: Protrusion
- 41: Opening
- 42: Flange
- 43: Second housing hole
- 44: Fitting groove
- 45: Introduction opening
- 46: Fitting claw
- 47: Protrusion
- 56: Fitting claw
- 61: Bottom surface
- 62: Top Surface
- 63: Cable
- 64: Diaphragm
- 71: Electronic Components
- 72: Connectors
- 81: Pressure sensor unit
- 234: Fitting groove
- 244: Fitting groove
- 246: Fitting claw
- 256: Fitting claw

## Claims

1. A pressure sensor unit (1) **characterized by** comprising:
- a pressure sensor (6) for detecting air pressure;
- an electronic substrate (7) for electrically processing signals from the pressure sensor (6); and
- a holder (3, 4) for holding the pressure sensor (6) and the electronic substrate (7);
wherein the holder (3, 4) comprises:
- a first holder member (3) comprising a first housing hole (33) for housing a portion of the pressure sensor (6); and
- a second holder member (4) comprising a second housing hole (43) for housing the part of the pressure sensor (6) not housed in the first housing hole (33), and provided facing the first housing hole (33);
wherein
- the pressure sensor (6) is housed in the first housing hole (33) and the second housing hole (43) such that a direction parallel to an air pressure application direction of the pressure sensor (6) matches with the direction of depth of the first housing hole (33) and the second housing hole (43);
- one of the first holder member (3) and the second holder member (4) comprises a first fitting groove (34);
- the other one of the first holder member (3) and the second holder member (4) comprises a first fitting claw (46) provided at a position corresponding to the first fitting groove (34);
- the first holder member (3) and the second holder member (4) are affixed together by fitting the first fitting claw (46) into the first fitting groove (34) and the pressure sensor (6) is affixed to the holder; and
in a state in which the first fitting claw (46) is fitted into the first fitting groove (34), the length from the bottom surface of the first housing hole (33) to the bottom surface of the second housing hole (43) is equal to the total length of the pressure sensor (6) in a direction parallel to the air pressure application direction.

2. The pressure sensor unit according to claim 1,
further comprising:
- two or more of first fitting grooves (34); and
- the same number of first fitting claws (46) as first fitting grooves (34).

3. The pressure sensor unit according to claim 1,
**characterized in that** the first fitting groove (34) is such that the first fitting groove (34) and the first fitting claw (46) fit together by the first fitting claw (46) being slid in a direction orthogonal to the direction parallel to the air pressure application direction.

4. The pressure sensor unit according to claim 3,
**characterized in that** the first fitting groove (234) comprises a protrusion (37) protruding in a direction parallel to the air pressure application direction, and when the first fitting claw (246) is slid in a direction orthogonal to the direction parallel to the air pressure application direction and the first fitting groove (234) and the first fitting claw (246) are fitted together, the first fitting claw goes past the protrusion.

5. The pressure sensor unit according to any of claims 1 to 4,
**characterized in that** the pressure sensor (6) is arranged such that a direction parallel to an air pressure application direction of the pressure sensor (6) matches with a direction of depth of the first housing hole (33) and the second housing hole (43), and is arranged in a space between the first flange (32) and the second flange (42).

6. The pressure sensor unit of according to any of claims 1 to 5,
**characterized in that** an elastic ring (12) is interposed between the inner wall of the first housing hole (33) and the pressure sensor (6).

7. The pressure sensor unit according to any of claims 1 to 6,
**characterized in that** the first holder member (3) and the second holder member (4) are made of resin.

8. The pressure sensor unit according to any of claims 1 to 7,
**characterized in that** the holder further comprises a third holder member (5); wherein one of the second holder member (4) and the third holder member (5) possesses second fitting grooves (44);
the other one of the second holder member (4) and the third holder member (5) possesses second fitting claws (56) provided at positions facing the second fitting grooves (44), in the same number as the second fitting grooves (44); and
the electronic substrate (7) is interposed between the second holder member (4) and the third holder member (5), and by the second fitting claws (56) being fitted into the second fitting grooves (44), the second holder member (4) and the third holder member (5) are affixed together and in addition the electronic substrate (7) is affixed in the holder.

9. The pressure sensor unit according to claim 8,
characterized further comprising:
- two or more of second fitting grooves (44); and
- the same number of second fitting claws (56) as second fitting grooves (44).

10. The pressure sensor unit according to claim 8 or claim 9,
**characterized in that** the second fitting grooves (44) are such that the second fitting grooves (44) and the second fitting claws (56) fit together by the second fitting claws (56) being slid in a direction orthogonal to the direction parallel to the air pressure application direction.

11. The pressure sensor unit according to any of claims 8 to 10,
**characterized in that** the second fitting grooves (44) have protrusions protruding in a direction parallel to the air pressure application direction, and when the second fitting claws (56) are slid in a direction orthogonal to the direction parallel to the air pressure application direction and the second fitting grooves (44) and the second fitting claws (56) are fitted together, the second fitting claws (56) go past the protrusions.

12. A brake device comprising:
- an air compressor for compressing air;
- a tank for storing air compressed by the air compressor; and
- a pressure sensor unit (1) according to any of claims 1 to 11.

13. The brake device according to claim 12,
**characterized in that** one of the first holder member (3) and the second holder member (4) comprises a first fitting groove (34);
the other one of the first holder member (3) and the second holder member (4) comprises a first fitting claw (46) provided at a position corresponding to the first fitting groove (34); and
the first holder member (3) and the second holder member (4) are affixed together by fitting the first fitting claw (46) into the first fitting groove (34).

## Patentansprüche

1. Drucksensoreinrichtung (1), die **dadurch gekennzeichnet ist, dass** sie Folgendes aufweist:
- einen Drucksensor (6) zum Detektieren von Luftdruck;
- ein elektrisches Substrat (7) zum elektrischen Verarbeiten von Signalen von dem Drucksensor (6); und
- eine Halterung (3, 4) zum Halten des Drucksensors (6) und des elektronischen Substrats (7);
wobei die Halterung (3, 4) Folgendes aufweist:
- ein erstes Halte-Element (3), das ein erstes Aufnahme-Loch (33) zum Aufnehmen eines Bereichs des Drucksensors (6) aufweist; und
ein zweites Halte-Element (4), das ein zweites Aufnahme-Loch (43) zum Aufnehmen des Teils des Drucksensors (6) aufweist, der nicht in dem ersten Aufnahme-Loch (33) aufgenommen wird, und wobei das zweite Halte-Element (4) dem ersten Aufnahme-Loch (33) gegenüberliegend angeordnet ist;
wobei
- der Drucksensor (6) in dem ersten Aufnahme-Loch (33) und dem zweiten Aufnahme-Loch (43) derart aufgenommen ist, dass eine Richtung parallel zu einer Luftdruck-Applikationsrichtung des Drucksensors (6) mit der Tiefenrichtung des ersten Aufnahme-Lochs (33) und des zweiten Aufnahme-Lochs (43) übereinstimmt;
- wobei eines von dem ersten Halte-Element (3) und dem zweiten Halte-Element (4) eine erste Befestigungsnut (34) aufweist;
- das andere Element von dem ersten Halte-Element (3) und dem zweiten Halte-Element (4) eine erste Befestigungsklaue (46) aufweist, die an einer Position angeordnet ist, die der ersten Befestigungsnut (34) entspricht;
- das erste Halte-Element (3) und das zweite Halte-Element (4) miteinander befestigt sind durch Befestigen der ersten Befestigungsklaue (46) in der ersten Befestigungsnut (34), und wobei der Drucksensor (6) an der Halterung befestigt ist, und
wobei in einem Zustand, bei dem die erste Befestigungsklaue (46) in der ersten Befestigungsnut (34) befestigt ist, die Länge von der Bodenfläche
des ersten Aufnahme-Lochs (33) zu der Bodenfläche des zweiten Aufnahme-Lochs (43) der Gesamtlänge des Drucksensors (6) entspricht, und zwar in einer Richtung parallel zu der Luftdruck-Applikationsrichtung.

2. Drucksensoreinrichtung gemäß Anspruch 1,
die ferner Folgendes aufweist:
- zwei oder mehr erste Befestigungsnuten (34); und
- die gleiche Anzahl von ersten Befestigungsklauen (46) wie erste Befestigungsnuten (34).

3. Drucksensoreinrichtung gemäß Anspruch 1,
**dadurch gekennzeichnet, dass** die erste Befestigungsnut (34) derart ausgebildet ist, dass die erste Befestigungsnut (34) und die erste Befestigungsklaue (46) dadurch miteinander befestigt werden, dass die erste Befestigungsklaue (46) in eine Richtung geschoben wird, die orthogonal ist zu der Richtung parallel zu der Luftdruck-Applikationsrichtung.

4. Drucksensoreinrichtung gemäß Anspruch 3,
**dadurch gekennzeichnet, dass** die erste Befestigungsnut (234) einen Vorsprung (37) aufweist, der in eine Richtung parallel zu der Luftdruck-Applikationsrichtung hervorsteht, und wobei die erste Befestigungsklaue hinter den Vorsprung reicht, wenn die erste Befestigungsklaue (246) in eine Richtung geschoben wird, die orthogonal zu der Richtung parallel zu der Luftdruck-Applikationsrichtung ist, und die erste Befestigungsnut (234) und die erste Befestigungsklaue (246) miteinander befestigt werden.

5. Drucksensoreinrichtung gemäß einem der Ansprüche 1 bis 4,
**dadurch gekennzeichnet, dass** der Drucksensor (6) derart angeordnet ist, dass eine Richtung parallel zu einer Luftdruck-Applikationsrichtung des Drucksensors (6) mit einer Tiefenrichtung des ersten Aufnahme-Lochs (33) und des zweiten Aufnahme-Lochs (43) übereinstimmt, und wobei der Drucksensor (6) in einem Raum zwischen dem ersten Flansch (32) und dem zweiten Flansch (42) angeordnet ist.

6. Drucksensoreinrichtung gemäß einem der Ansprüche 1 bis 5,
**dadurch gekennzeichnet, dass** ein elastischer Ring (12) zwischen der inneren Wand des ersten Aufnahme-Lochs (33) und dem Drucksensor (6) eingefügt ist.

7. Drucksensoreinrichtung gemäß einem der Ansprüche 1 bis 6,
**dadurch gekennzeichnet, dass** das erste Halte-Element (3) und das zweite Halte-Element (4) aus Harz hergestellt sind.

8. Drucksensoreinrichtung gemäß einem der Ansprüche 1 bis 7,
**dadurch gekennzeichnet, dass** die Halterung ferner ein drittes Halte-Element (5) aufweist;
wobei ein Element von dem zweiten Halte-Element (4) und dem dritten Halte-Element (5) zweite Befestigungsnuten (44) aufweist;
wobei das andere Element von dem zweiten Halte-Element (4) und dem dritten Halte-Element (5) zweite Befestigungsklauen (56) aufweist, die an Positionen angeordnet sind, die der zweiten Befestigungsnut (44) gegenüberliegen, und zwar in der gleichen Anzahl wie die der zweiten Befestigungsnuten (44); und
wobei das elektronische Substrat (7) zwischen dem zweiten Halte-Element (4) und dem dritten Halte-Element (5) eingesetzt ist, und wobei das zweite Halte-Element (4) und das dritte Halte-Element (5) miteinander befestigt sind und zusätzlich das elektronische Substrat (7) in der Halterung befestigt ist, und zwar dadurch, dass die zweiten Befestigungsklauen (56) in den zweiten Befestigungsnuten (44) befestigt sind.

9. Drucksensoreinrichtung gemäß Anspruch 8,
**dadurch gekennzeichnet, dass** die Drucksensoreinrichtung ferner Folgendes aufweist:
- zwei oder mehr zweite Befestigungsnuten (44); und
- die gleiche Anzahl von zweiten Befestigungsklauen (56) wie zweiten Befestigungsnuten (44).

10. Drucksensoreinrichtung gemäß Anspruch 8 oder 9,
**dadurch gekennzeichnet, dass** die zweiten Befestigungsnuten (44) derart ausgebildet sind, dass die zweiten Befestigungsnuten (44) und die zweiten Befestigungsklauen (56) aneinander dadurch befestigt werden, dass die zweiten Befestigungsklauen (56) in eine Richtung geschoben werden, die
orthogonal ist zu der Richtung parallel zu der Luftdruck-Applikationsrichtung.

11. Drucksensoreinrichtung gemäß einem der Ansprüche 8 bis 10,
**dadurch gekennzeichnet, dass** die zweite Befestigungsnuten (44) Vorsprünge aufweisen, die in eine Richtung hervorstehen, die parallel zu der Luftdruck-Applikationsrichtung ist, und wobei die zweiten Befestigungsklauen (56) hinter die Vorsprünge reichen, wenn die zweiten Befestigungsklauen (56) in eine Richtung geschoben werden, die orthogonal zu der Richtung parallel zu der Luftdruck-Applikationsrichtung ist, und die zweiten Befestigungsnuten (44) und die zweiten Befestigungsklauen (56) miteinander befestigt sind.

12. Bremsvorrichtung, die Folgendes aufweist:
- einen Luft-Kompressor zum Komprimieren von Luft;
- einen Behälter zum Speichern von Luft, die mittels des Luftkompressors komprimiert worden ist; und
- eine Drucksensoreinrichtung (1) gemäß einem der Ansprüche 1 bis 11.

13. Bremsvorrichtung gemäß Anspruch 12,
**dadurch gekennzeichnet, dass** ein Element von dem ersten Halte-Element (3) und dem zweiten Halte-Element (4) eine erste Befestigungsnut (34) aufweist;
wobei das andere Element von dem ersten Halte-Element (3) und dem zweiten Halte-Element (4) eine erste Befestigungsklaue (46) aufweist, die an einer Position angeordnet ist, die der ersten Befestigungsnut (34) entspricht; und
wobei das erste Halte-Element (3) und das zweite Halte-Element (4) miteinander durch Befestigen der ersten Befestigungsklaue (46) in der ersten Befestigungsnut (34) befestigt sind.

## Revendications

1. Unité formant capteur de pression (1) **caractérisée en ce qu'**elle comprend :
- un capteur de pression (6) pour détecter une pression d'air ;
- un substrat électronique (7) pour traiter électriquement des signaux provenant du capteur de pression (6) ; et
- un support (3, 4) pour supporter le capteur de pression (6) et le substrat électronique (7) ;
dans laquelle le support (3, 4) comprend :
- un premier élément de support (3) comprenant un premier trou de logement (33) pour loger une portion du capteur de pression (6) ; et
- un second élément de support (4) comprenant un second trou de logement (43) pour loger la partie du capteur de pression (6) qui n'est pas logée dans le premier trou de logement (53), et prévu en face du premier trou de logement (33) ;
dans laquelle
- le capteur de pression (6) est logé dans le premier trou de logement (33) et dans le second trou de logement (43) de telle sorte qu'une direction parallèle à une direction d'application de pression d'air du capteur de pression (6) s'accorde avec la direction en profondeur du premier trou de logement (33) et du second trou de logement (43) ;
- un élément parmi le premier élément de support (3) et le second élément de support (4) comprend une première rainure de montage (54) ;
- l'autre parmi le premier élément de support (3) et le second élément de support (4) comprend une première griffe de montage (46) prévue à une position correspondant à la première rainure de montage (34) ;
- le premier élément de support (3) et le second élément de support (4) sont fixés conjointement en montant la première griffe de montage (46) dans la première rainure de montage (34) et le capteur de pression (6) est fixé sur le support ; et
dans un état dans lequel la première griffe de montage (46) est montée dans la première rainure de montage (34), la longueur allant depuis la surface inférieure du premier trou de logement (33) jusqu'à la surface inférieure du second trou de logement (43) est égale à la longueur totale du capteur de
pression (6) dans une direction parallèle à la direction d'application de la pression d'air.

2. Unité formant capteur de pression selon la revendication 1, comprenant en outre :
- deux ou plusieurs premières rainures de montage (34) ; et
- le même nombre de premières griffes de montage (46) que de premières rainures de montage (34).

3. Unité formant capteur de pression selon la revendication 1,
**caractérisée en ce que** la première rainure de montage (34) est telle que la première rainure de montage (34) et la première griffe de montage (46) se montent conjointement du fait que la première griffe de montage (46) est coulissée dans une direction orthogonale à la direction parallèle à la direction d'application de la pression d'air.

4. Unité formant capteur de pression selon la revendication 3,
**caractérisée en ce que** la première rainure de montage (234) comprend une projection (37) qui se projette dans une direction parallèle à la direction d'application de la pression d'air, et
quand la première griffe de montage (246) est coulissée dans une direction orthogonale à la direction parallèle à la direction d'application de la pression d'air et quand la première rainure de montage (234) et la première griffe de montage (246) sont montées ensemble, la première griffe de montage passe au-delà de la projection.

5. Unité formant capteur de pression selon l'une quelconque des revendications 1 à 4,
**caractérisée en ce que** le capteur de pression d'air (6) est agencé de telle façon qu'une direction parallèle à une direction d'application de la pression d'air du capteur de pression (6) s'accorde avec une direction en profondeur du premier trou de logement (33) et du second trou de logement (43), et est agencé dans un espace entre la première bride (32) et la seconde bride (42).

6. Unité formant capteur de pression selon l'une quelconque des revendications 1 à 5, **caractérisée en ce qu'**une bague élastique (12) est interposée entre la paroi intérieure du premier trou de boîtier (33) et le capteur de pression (6).

7. Unité formant capteur de pression selon l'une quelconque des revendications 1 à 6,
**caractérisée en ce que** le premier élément de support (3) et le second élément de support (4) sont faits en résine.

8. Unité formant capteur de pression selon l'une quelconque des revendications 1 à 7,
**caractérisée en ce que** le support comprend en outre un troisième élément de support (5) ;
dans lequel un élément parmi le second élément de support (4) et le troisième élément de support (5) possède des secondes rainures de montage (44) ;
l'autre parmi le second élément de support (4) et le troisième élément de support (5) possède des secondes griffes de montage (56) prévues à des positions en face des secondes rainures de montage (44), en même nombre que les secondes rainures de montage (44) ; et
le substrat électronique (7) est interposé entre le second élément de support (44) et le troisième élément de support (5) et, du fait que les secondes griffes de montage (56) sont montées dans les secondes rainures de montage (44), le second élément de support (4) et le troisième élément de support (5) sont fixés ensemble et en supplément, le substrat électronique (7) est fixé dans le support.

9. Unité formant capteur de pression selon la revendication 8,
**caractérisée en ce qu'**elle comprend en outre :
- deux ou plusieurs secondes rainures de montage (44) ; et
- le même nombre de secondes griffes de montage (56) que de secondes rainures de montage (44).

10. Unité formant capteur de pression selon la revendication 8 ou 9,
**caractérisée en ce que** les secondes rainures de montage (44) sont telles que les secondes rainures de montage (44) et les secondes griffes de montage (56) sont montées ensemble du fait que les secondes griffes de montage (56) sont coulissées dans une direction orthogonale à la direction parallèle à la direction d'application de la pression d'air.

11. Unité formant capteur de pression selon l'une quelconque des revendications 8 à 10,
**caractérisée en ce que** les secondes rainures de montage (44) ont des projections qui se projettent dans une direction parallèle à la direction d'application de la pression d'air et, quand les secondes griffes de montage (56) sont coulissées dans une direction orthogonale à la direction parallèle à la direction d'application de la pression d'air et que les secondes rainures de montage (44) et les secondes griffes de montage (56) sont montées ensemble, les secondes griffes de montage (56) s'étendent au-delà des projections.

12. Dispositif de freinage comprenant :
- un compresseur d'air pour comprimer de l'air ;
- un réservoir pour stocker l'air comprimé par le compresseur d'air ; et
- une unité formant capteur de pression (1) selon l'une quelconque des revendications 1 à 11.

13. Dispositif de freinage selon la revendication 12,
**caractérisé en ce qu'**un élément parmi le premier élément de support (3) et le second élément de support (4) comprend une première rainure de montage (34) ;
l'autre parmi le premier élément de support (3) et le second élément de support (4) comprend une première griffe de montage (46) prévue à une position correspondant à la première rainure de montage (34) ; et
le premier élément de support (3) et le second élément de support (4) sont fixés ensemble en montant la première griffe de montage (46) dans la première rainure de montage (34).
